# EUROPEAN PATENT APPLICATION

(11) **EP 1 453 134 A1**
(43) Date of publication of application: **01.09.2004**
(21) Application number: 04001019.1
(22) Date of filing: 19.01.2004
(51) Int. Cl.: H01M 16/00, H02J 7/34

(54) **Electronic apparatus, electronic system, and method of controlling operation of the same**

(30) Priority: 21.01.2003 JP 2003012192
(71) Applicant: Kabushiki Kaisha Toshiba, Tokyo (JP)
(72) Inventor: Ozeki, Akihiro, 1-chome Minato-ku Tokyo 105-8001 (JP)
(74) Representative: Henkel, Feiler & Hänzel

(57) **Abstract**

An electronic apparatus (1) is equipped with a fuel cell (22) capable of generating power by chemical reaction and a chargeable/dischargeable secondary battery (23). The electronic apparatus (1) determines whether a capacity of the secondary battery (23) is smaller than a predetermined value when a power supply of the electronic apparatus (1) turns off, and causes the secondary battery (23) to be charged when the determination indicates that the capacity of the secondary battery (23) is smaller than the predetermined value.

## Description

The present invention relates to a technique of controlling an operation of an electronic system that can be operated using, for example, a direct methanol fuel cell as a power supply.

Recently, portable electronic apparatuses of various types such as a digital camera and a portable information terminal called a PDA (personal digital assistant) have been developed and widely used. Such electronic apparatuses are capable of being driven by a battery.

Moreover, recently, the issue of environment has received great attention and the development of environmentally-friendly batteries has been increased. A direct methanol fuel cell (hereinafter referred to as DMFC) is well known as such a battery.

The DMFC generates electric energy by chemical reaction between oxygen and methanol provided as fuel. The DMFC has a structure in which an electrolyte is interposed between two electrodes made of porous metal or carbon. Since the DMFC produces no hazardous wastes, its practicality is strongly desired.

Some DMFCs include an auxiliary mechanism such as a liquid-sending/air-blowing pump in order to increase the output per unit area (volume). This type of DMFC generally has a secondary battery such as a lithium battery because the auxiliary mechanism needs to be driven when the DMFC starts up.

For example, Jpn. Pat. Appln. KOKAI Publication No. 11-154520 discloses a technique of a secondary battery (see paragraph [0017] etc.). This secondary battery is a startup battery for supplying power to an auxiliary mechanism at the beginning of startup of the main body of a fuel cell.

However, the above Publication has the following problem. The fuel cell cannot normally start up if the amount of power remaining in the secondary battery is not enough to supply power to an auxiliary mechanism such as a pump and a fan at the startup of the fuel cell (or at the startup of the electronic apparatus).

Under the circumstances described above, it is desirable to provide a system which ensures that a secondary battery keeps an amount of power necessary for driving an auxiliary mechanism of a fuel cell when the fuel cell starts up.

Embodiments of the present invention may provide an electronic apparatus, an electronic system, and a method of controlling an operation of the same, which allow an auxiliary mechanism of a fuel cell to be driven without any trouble when the fuel cell starts up.

According to one aspect of the present invention, there is provided an electronic apparatus with a fuel cell capable of generating power by chemical reaction and a chargeable/dischargeable secondary battery, comprising a determining unit to determine whether a capacity of the secondary battery is smaller than a first value when a power supply of the electronic apparatus turns off; and a controlling unit to cause the secondary battery to be charged when the determining unit determines that the capacity of the secondary battery is smaller than the first value.

According to another aspect of the present invention, there is provided a method of controlling an operation of an electronic apparatus with a fuel cell capable of generating power by chemical reaction and a chargeable/dischargeable secondary battery, the method comprising determining whether a capacity of the secondary battery is smaller than a first value when a power supply of the electronic apparatus turns off; and charging the secondary battery when the determination indicates that the capacity of the secondary battery is smaller than the first value.

According to still another aspect of the present invention, there is provided an electronic system, comprising a fuel cell unit which has a fuel cell capable of generating power by chemical reaction and a repeatedly chargeable/dischargeable secondary battery; and an electronic apparatus operable using the fuel cell unit, the electronic apparatus comprising, a determining unit to determine whether a capacity of the secondary battery is smaller than a first value when a power supply of the electronic apparatus turns off, and a controlling unit to give an instruction to charge the secondary battery when the determining unit determines that the capacity of the secondary battery is smaller than the first value, the cell unit comprising a charging control unit to charge the secondary battery using power generated by the fuel cell in response to the instruction.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an external view of an electronic system according to an embodiment of the present invention;
FIG. 2 is a schematic block diagram of a fuel cell unit;
FIG. 3 is another schematic block diagram of the fuel cell unit;
FIG. 4 is a schematic block diagram of electronic apparatus;
FIG. 5 is an illustration of an example of a set screen displayed when a power supply is turned off (there is enough amount of power remaining in the secondary battery);
FIG. 6 is an illustration of another example of a set screen displayed when a power supply is turned off (there is not enough amount of power remaining in the secondary battery);
FIG. 7 is an illustration of still another example of a set screen displayed when a power supply is turned off (the conditions for charging are specified);
FIG. 8 is a flowchart showing a first half part of the procedure for controlling an operation of the fuel cell unit that is executed by a CPU when a power-off process is performed for the main body of the electronic apparatus; and
FIG. 9 is a flowchart showing a last half part of the procedure for controlling an operation of the fuel cell unit that is executed by a CPU when a power-off process is performed for the main body of the electronic apparatus.

Embodiments of the present invention will be described below with reference to the drawings.

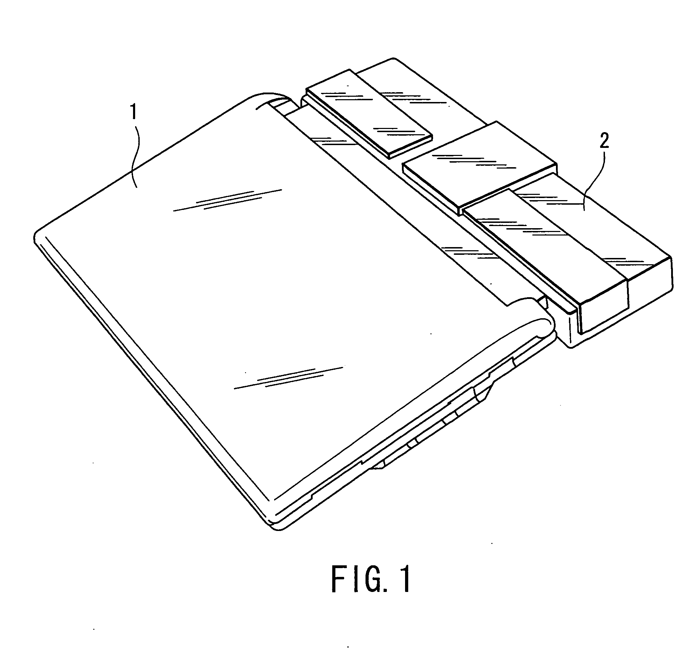

FIG. 1 is an external view of an electronic system according to an embodiment of the present invention.

Referring to FIG. 1, the electronic system includes an electronic apparatus 1 and a fuel cell unit 2 that is detachable from the electronic apparatus 1. The electronic apparatus 1 is a notebook personal computer in which a top cover having an LCD (liquid crystal device) on its inner side is attached to the main body by a hinge mechanism such that it can freely be opened and closed. The electronic apparatus 1 can be operated by power supplied from the fuel cell unit 2. The fuel cell unit 2 includes a DMFC capable of generating power by chemical reaction and a repeatedly chargeable/dischargeable secondary battery.

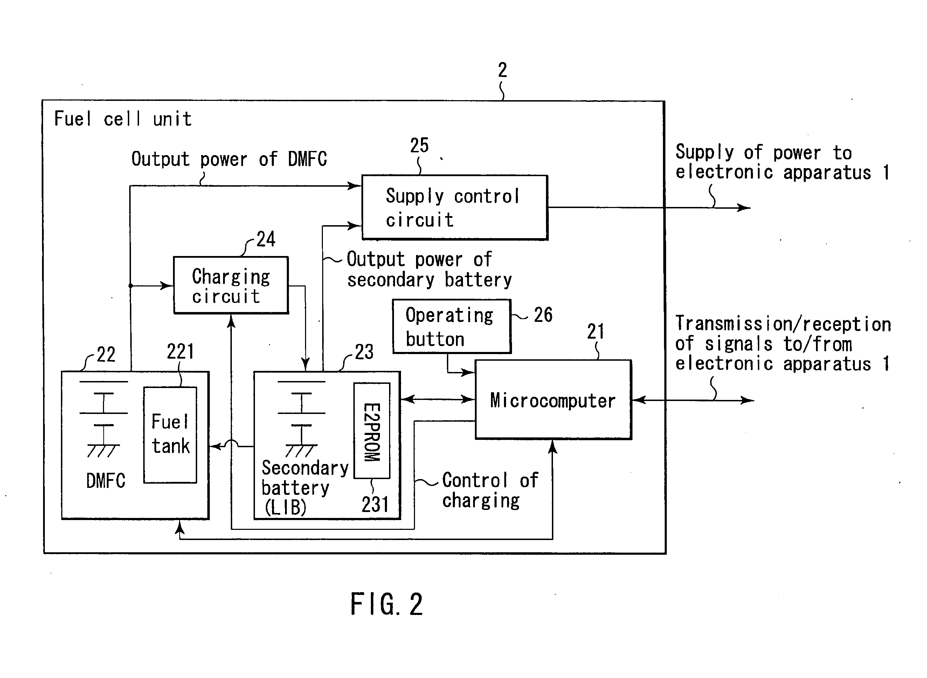

FIG. 2 is a schematic block diagram of the fuel cell unit 2.

Referring to FIG. 2, the fuel cell unit 2 includes a microcomputer 21, a DMFC 22, a secondary battery 23, a charging circuit 24, a supply control circuit 25 and an operating button 26.

The microcomputer 21 controls the entire operation of the fuel cell unit 2 and has a communication function of transmitting/receiving signals to/from the electronic apparatus 1. The microcomputer 21 controls the operations of the DMFC 22 and secondary battery 23 in response to an indicating signal and performs a process corresponding to the depression of the operating button 26.

The DMFC 22 includes a detachable cartridge fuel tank 221 and outputs power that is generated by chemical reaction between air (oxygen) and methanol stored in the fuel tank 221. The chemical reaction occurs in a reaction section referred to as a cell stack or the like. In order to send the methanol and air into the cell stack with efficiency, the DMFC 22 has an auxiliary mechanism such as a pump. The DMFC also has a mechanism to notify the microcomputer 21 of whether the fuel tank 221 is attached or detached, the amount of methanol remaining in the fuel tank 221, the operating status of the auxiliary mechanism, and the current amount of output power.

The secondary battery 23 stores power output from the DMFC 22 through the charging circuit 24 and outputs the power in response to the indication from the microcomputer 21. The secondary battery 23 has an EEPROM 231 that holds basic information indicative of discharge characteristics and the like. The EEPROM 231 can be accessed from the microcomputer 21. The secondary battery 23 has a mechanism to notify the microcomputer 21 of both the current output voltage and current output current. The microcomputer 21 computes the amount of power remaining in the secondary battery 23 based on both the basic information read out of the EEPROM 231 and the output voltage and current indicated by the secondary battery 23, and notifies the electronic apparatus 1 of the computed amount. Assume here that the secondary battery 23 is a lithium battery (LIB).

The charging circuit 24 charges the secondary battery 23 with power output from the DMFC 22. The microcomputer 21 controls whether the secondary battery 23 is charged or not.

The supply control circuit 25 outputs the power of the DMFC 22 and secondary battery 23 to the outside according to the circumstances.

The operating button 26 is a dedicated button to give a specific instruction to stop the entire operation of the DMFC 22 or fuel cell unit 2. The same function as that of the operating button 26 can be fulfilled by a button presented by the application on the LCD screen of the electronic apparatus 1 or by depressing a power supply button of the electronic apparatus 1 long (e.g., depressing it for longer than a predetermined period of time).

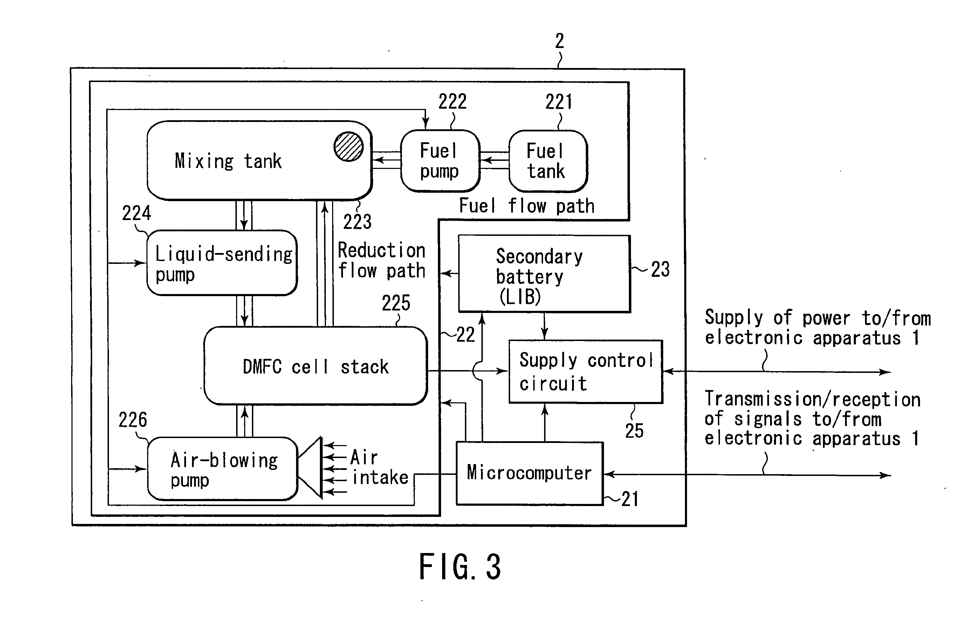

FIG. 3 is another schematic block diagram of the fuel cell unit 2. The components common to those of FIG. 2 are denoted by the same reference numerals.

Referring to FIG. 3, the DMFC 22 includes a fuel tank 221, a fuel pump 222, a mixing tank 223, a liquid-sending pump 224, a DMFC cell stack 225 and an air-blowing pump 226.

The methanol in the fuel tank 221 is supplied to the mixing tank 223 by the fuel pump 222 and diluted. The diluted methanol is sent into the DMFC cell stack 225 by the liquid-sending pump 224. Air is sent into the DMFC cell stack 225 by the air-blowing pump 226, and an aqueous solution of the diluted methanol reacts to oxygen in the air to generate power.

The foregoing microcomputer 21 performs control to drive an auxiliary mechanism such as the fuel pump 222, liquid-sending pump 224, air-blowing pump 226 and fan by the power of the secondary battery 23 in response to a startup indicating signal transmitted from the electronic apparatus 1. The microcomputer 21 controls the supply control circuit 25 such that the electronic apparatus 1 is supplied with the power from the DMFC cell stack 225 or the secondary battery 23. The microcomputer 21 also performs control to charge the secondary battery 23 before the DMFC 22 stops in response to a stop indicating signal sent from the electronic apparatus 1.

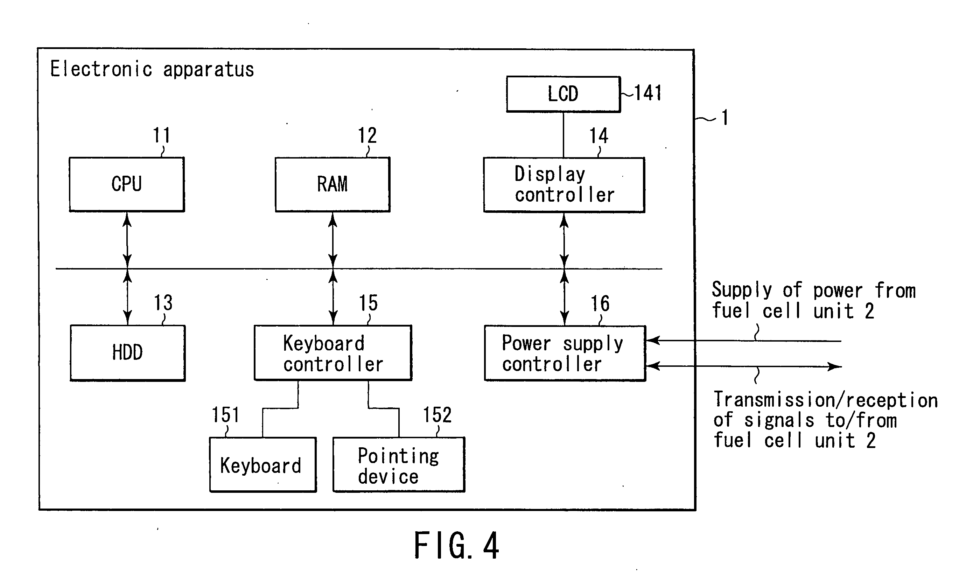

FIG. 4 is a schematic block diagram of the electronic apparatus 1.

Referring to FIG. 4, the electronic apparatus 1 includes a CPU 11, a RAM (main memory) 12, an HDD 13, a display controller 14, a keyboard controller 15 and a power supply controller 16. These are connected to a system bus.

The CPU 11 controls the entire operation of the electronic apparatus 1 and executes various programs stored in the RAM 12. The RAM 12 is a memory device serving as a main memory of the electronic apparatus 1 to store various programs to be executed by the CPU 11 and various types of data to be used for the programs. The HDD 13 is a memory device serving as an external memory of the electronic apparatus 1 to store various programs and a large amount of data as an auxiliary device of the RAM 12.

The display controller 14 controls the output side of a user interface in the electronic apparatus 1 and displays image data created by the CPU 11 on an LCD 141. The keyboard controller 15 controls the input side of the user interface in the electronic apparatus 1. The controller 15 converts the operations of a keyboard 151 and a pointing device 152 into numbers and supplies them to the CPU 11 via a register included therein.

The power supply controller 16 controls the supply of power to the respective components of the electronic apparatus 1. The controller 16 has a power-receiving function of receiving power from the fuel cell unit 2 and a communication function of transmitting/receiving signals to/from the fuel cell unit 2. It is the microcomputer 21 in the fuel cell unit 2 shown in FIGS. 2 and 3 that transmits/receives signals to/from the power supply controller 16.

By communication between the microcomputer 21 in the fuel cell unit 2 and the power supply controller 16 in the electronic apparatus 1, the electronic apparatus 1 is notified of the states of the DMFC 22 and secondary battery 23 included in the fuel cell unit 2 as state information. Thus, the electronic apparatus 1 controls an operation based on the state information.

In the embodiment described above, the CPU 11 executes a specific program to control the operation of the fuel cell unit 2 when the main body of the electronic apparatus 1 is turned off (or when the OS is shut down).

More specifically, if a user gives a specific instruction to turn off the electronic apparatus 1 (or shut down the OS), the CPU 11 determines whether the remaining amount of power (remaining capacity) of the secondary battery 23 is smaller than a predetermined amount on the basis of the information obtained by communication with the fuel cell unit 2. If the CPU 11 determines that the remaining amount is smaller, it causes the fuel cell unit 2 to charge the secondary battery 23 and then supplies the unit 2 with a signal to give an instruction to stop the operation of the DMFC 22.

Even though the CPU 11 does not determine that the remaining amount is smaller, it supplies the fuel cell unit 2 with a signal to give an instruction to charge the secondary battery 23 if an instruction to charge the secondary battery 23 is issued through the LCD 141 or the like.

If an instruction to stop charging the secondary battery 23 (or to stop operating the DMFC 22) is issued through the operating button 26 or LCD 141 even during the charging of the secondary battery 23, the CPU 11 stops the charging and supplies the fuel cell unit 2 with a signal to give an instruction to stop the operation of the DMFC 22. Moreover, if an instruction to turn on the power supply is issued through the power supply button of the electronic apparatus 1 even during the charging of the secondary battery 23, the CPU 11 supplies the fuel cell unit 2 with a signal to give an instruction to stop the charging and turns on the power supply of the electronic apparatus 1.

Furthermore, when the power supply turns off, the CPU 11 displays on the LCD 141 a screen for making various settings for charging the secondary battery 23, such as a screen capable of designating the time for charging the secondary battery 23 and the amount of power remaining in the battery 23.

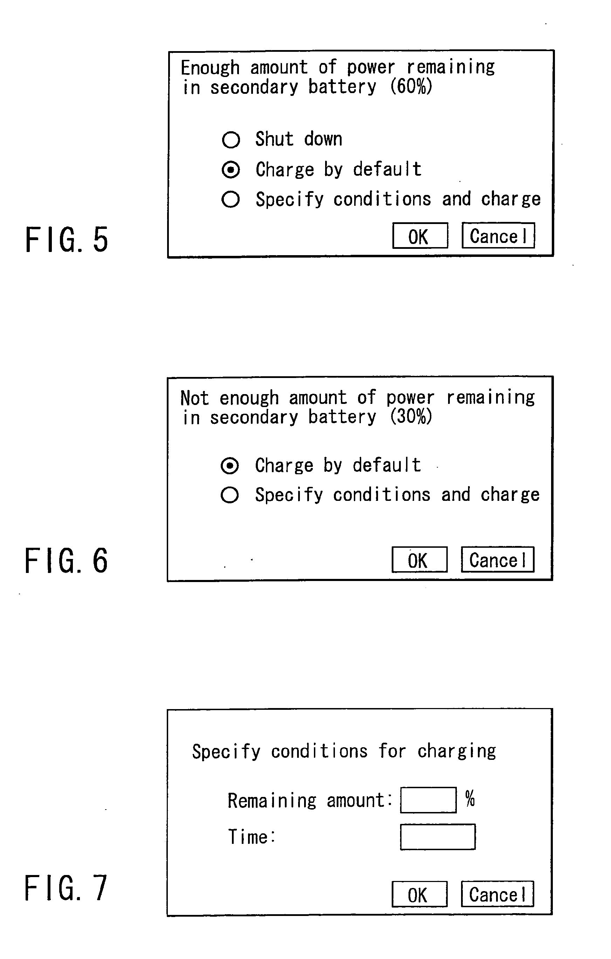

FIG. 5 is an illustration of an example of a set screen displayed when a power supply is turned off (there is enough amount of power remaining in the secondary battery).

When the CPU 11 determines that there is enough amount of power remaining in the secondary battery 23, a message "there is enough amount of power remaining in secondary battery" is displayed together with the remaining amount. In this case, selective items "shut down," "charge by default," and "specify conditions and charge" are displayed together with radio buttons. If an operator selects one of the items and depresses the button "OK", its corresponding process is performed by the CPU 11.

FIG. 6 is an illustration of another example of a set screen displayed when a power supply is turned off (there is not enough amount of power remaining in the secondary battery).

When the CPU 11 determines that there is not enough amount of power remaining in the secondary battery 23, a message "there is not enough amount of power remaining in the secondary battery" is displayed together with the remaining amount. In this case, selective items "charge by default" and "specify conditions and charge" are displayed together with radio buttons. If an operator selects one of the items and depresses the button "OK", its corresponding process is performed by the CPU 11.

FIG. 7 is an illustration of still another example of a set screen displayed when a power supply is turned off (the conditions for charging are specified).

When an operator designates the item "specify conditions and charge" in the set screens shown in FIGS. 5 and 6, a message "specify conditions for charging" is displayed as illustrated in FIG. 7. In this case, the operator can designate one or both of "remaining amount (%)" to be obtained by charging and "time" to be required for charging. When the operator inputs a value or values and depresses the button "OK", its corresponding process is performed by the CPU 11.

The control functions of charging the secondary battery 23, which are fulfilled by the embodiment of the present invention, are summarized as follows:
1. Function of confirming whether to charge the secondary battery 23 by operating the DMFC 22 after shutdown to an operator when the operator turns off the power supply of the electronic apparatus 1.
   (The DMFC 22 is stopped if the battery is not charged.)
2. When the secondary battery 23 is charged:
   2.1. When "remaining amount" is designated:
      Function of charging the secondary battery 23 until the amount of power remaining in the battery 23 reaches a designated amount (%) and stopping the operation of the DMFC 22 after the charging is completed.
   2.2. When "time" is designated:
      Function of charging the secondary battery 23 for the designated period of time and stopping the operation of the DMFC 22 after a lapse of a predetermined period of time.
3. When an instruction to stop charging is issued during charging:
   Function of stopping the operation of the DMFC 22 immediately when the operating button 26 corresponding to a stop button is depressed.
4. When an instruction to start up the electronic apparatus 1 is issued during charging:
   Function of stopping charging the secondary battery immediately and supplying power to the main body of the electronic apparatus 1.

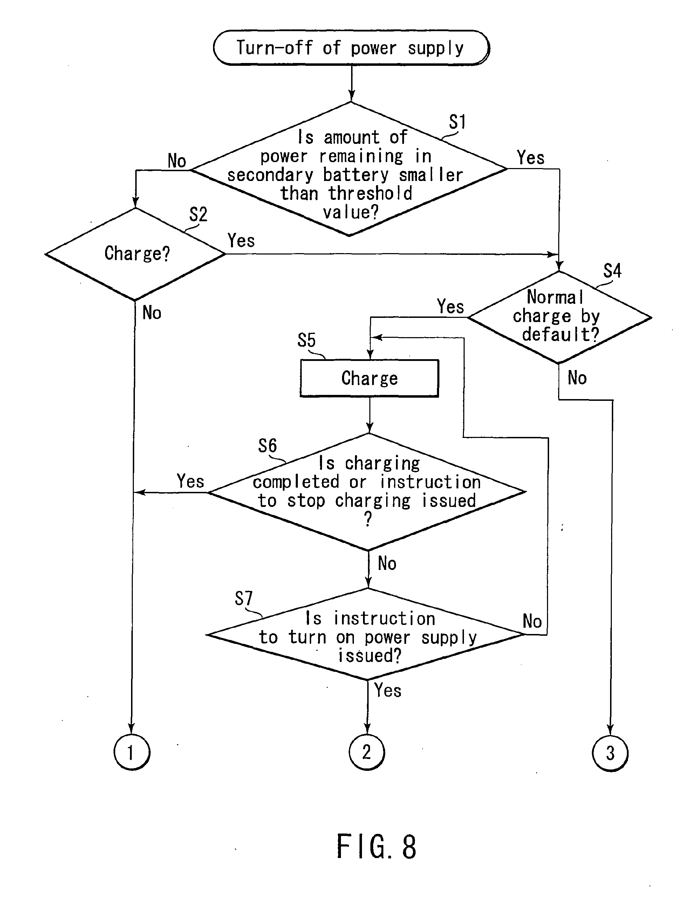

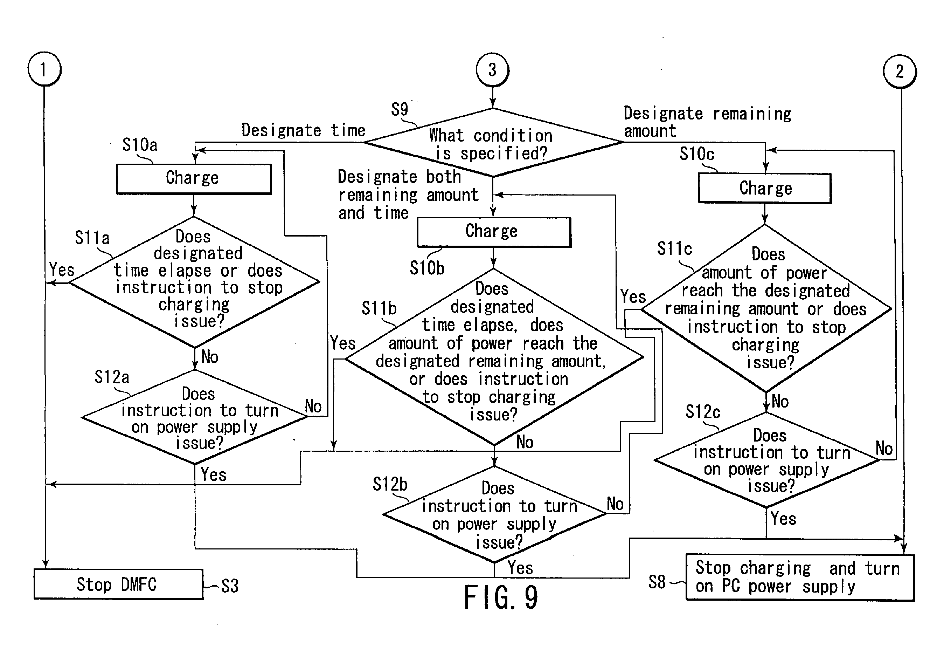

The procedure for controlling an operation of the fuel cell unit 2, which is performed by the CPU 11 when the power supply of the main body of the electronic apparatus 1 is turned off, will now be described with reference to FIGS. 8 and 9.

When an operator gives an instruction to turn off the power supply (or shut down the OS) through the power supply button or LCD 141 of the main body of the electronic apparatus 1, the CPU 11 executes a predetermined program and performs the following process.

First, the CPU 11 determines whether the amount of power remaining in the secondary battery is smaller than a threshold value (step S1). If it is not smaller, selective items for causing an operator to decide whether to charge the battery are displayed on the LCD 141 together with a message "there is enough amount of power remaining in the secondary battery" (see FIG. 5).

If the operator does not designate the "charge" (No in step S2), the CPU 11 instructs the microcomputer 21 in the fuel cell unit 2 to stop the operation of the DMFC 22 (step S3). On the other hand, if the operator designates "charge" (Yes in step S2), the CPU 11 determines which of "charge by default" and "specify conditions and charge" is designated (step S4).

If the CPU 11 determines in step S1 that the amount of power remaining in the secondary battery is smaller than the threshold value (Yes in step S1), selective items for causing an operator to decide how to charge the battery are displayed on the LCD 141 together with a message "there is not enough amount of power remaining in secondary battery" (see FIG. 6). Then, the CPU 11 determines which of "charge by default" and "specify conditions and charge" is designated (step S4).

If the operator designates "charge by default" (Yes in step S4), the CPU 11 instructs the microcomputer 21 in the fuel cell unit 2 to charge the secondary battery 23 until a predetermined period of time elapses or the remaining amount of power reaches a predetermined value (step S5).

If the charging of the secondary battery 23 is completed or the operator gives an instruction to stop charging the battery (Yes in step S6), the CPU 11 instructs the microcomputer 21 in the fuel cell unit 2 to stop the charging of the secondary battery 23 and stop the operation of the DMFC 22 (step S3). If not, the CPU 11 determines whether the operator gives an instruction to turn on the power supply (step S7). If the instruction is not issued (No in step S7), the charging continues. If the instruction is issued (Yes in step S7), the CPU 11 instructs the microcomputer 21 to stop charging the secondary battery 23 and turn on the power supply of the electronic apparatus 1 (step S8).

If the CPU 11 determines in step S4 that the operator designates "specify conditions and charge" (No in step S4), boxes for inputting values of "remaining amount" and "time" are displayed on the LCD 141 together with a message "specify conditions for charging" (see FIG. 7). Then, the CPU 11 determines what condition is specified (step S9).

When "time" is designated, the charging of the secondary battery 23 is performed for a period of the "time" (step S10a). If the designated time elapses or the operator gives an instruction to stop charging the secondary battery 23 (Yes in step S11a), the CPU 11 instructs the microcomputer 21 in the fuel cell unit 2 to stop the charging of the secondary battery 23 and stop the operation of the DMFC 22 (step S3). If not, the CPU 11 determines whether the operator gives an instruction to turn on the power supply (step S12a). If the instruction is not issued (No in step S12a), the charging continues. If the instruction is issued (Yes in step S12a), the CPU 11 instructs the microcomputer 21 to stop charging the secondary battery 23 and turn on the power supply of the electronic apparatus 1 (step S8).

If the operator designates both "time" and "remaining amount," the charging of the secondary battery 23 is performed until a period of the "time" elapses or the amount of power reaches the "remaining amount" (step S10b). If the designated time elapses or the amount of power reaches the designated remaining amount or the operator gives an instruction to stop charging the secondary battery 23 (Yes in step S11b), the CPU 11 instructs the microcomputer 21 in the fuel cell unit 2 to stop the charging of the secondary battery 23 and stop the operation of the DMFC 22 (step S3). If not, the CPU 11 determines whether the operator gives an instruction to turn on the power supply (step S12b). If the instruction is not issued (No in step S12b), the charging continues. If the instruction is issued (Yes in step S12b), the CPU 11 instructs the microcomputer 21 to stop charging the secondary battery 23 and turn on the power supply of the electronic apparatus 1 (step S8).

If the operator designates "remaining amount," the charging of the secondary battery 23 is performed until the amount of power reaches the "remaining amount" (step S10c). If the amount of power reaches the designated remaining amount or the operator gives an instruction to stop charging the secondary battery 23 (Yes in step S11c), the CPU 11 instructs the microcomputer 21 in the fuel cell unit 2 to stop the charging of the secondary battery 23 and stop the operation of the DMFC 22 (step S3). If not, the CPU 11 determines whether the operator gives an instruction to turn on the power supply (step S12c). If the instruction is not issued (No in step S12c), the charging continues. If the instruction is issued (Yes in step S12c), the CPU 11 instructs the microcomputer 21 to stop charging the secondary battery 23 and turn on the electronic apparatus 1 (step S8).

According to the above embodiment of the present invention, if there is not enough amount of power remaining in the secondary battery 23 when the power supply of the electronic apparatus 1 is turned off (or the OS is shut down), the turn-off is performed after the battery 23 is charged. Thus, power that is required by an auxiliary mechanism of the DMFC 22 can be secured when the electronic apparatus 1 starts up next time.

In the foregoing embodiment, the electronic apparatus 1 (CPU 11) carries out various determination processes of charging the secondary battery 23. However, the fuel cell unit 2 (microcomputer 21) can carry out all or some of the determination processes.

As has been described above in detail, according to the present invention, an auxiliary mechanism of the fuel cell unit can be driven without any trouble when the fuel cell starts up.

## Claims

1. An electronic apparatus with a fuel cell (22) capable of generating power by chemical reaction and a chargeable/dischargeable secondary battery (23), **characterized by** comprising:
a determining unit (11) determining whether a capacity of the secondary battery is smaller than a first value when a power supply of the electronic apparatus turns off; and
a controlling unit (11, 16, 21, 24) causing the secondary battery to be charged when the determining unit determines that the capacity of the secondary battery is smaller than the first value.

2. The electronic apparatus according to claim 1, **characterized in that** the controlling unit (11, 16, 21, 24) stops charging the secondary battery when a specific instruction is issued while the secondary battery is being charged.

3. The electronic apparatus according to claim 1, **characterized in that** the controlling unit (11, 16, 21, 24) stops charging the secondary battery and turns on the power supply of the electronic apparatus if a specific instruction is issued while the secondary battery is being charged.

4. The electronic apparatus according to claim 1, **characterized in that** the controlling unit (11, 16, 21, 24) stops charging the secondary battery when a predetermined period of time elapses after the secondary battery starts to be charged.

5. The electronic apparatus according to claim 1, **characterized in that** the controlling unit (11, 16, 21, 24) stops charging the secondary battery when the capacity of the secondary battery exceeds a second value after the secondary battery starts to be charged.

6. A method of controlling an operation of an electronic apparatus with a fuel cell capable of generating power by chemical reaction and a chargeable/dischargeable secondary battery, the method **characterized by** comprising the steps of:
determining whether a capacity of the secondary battery is smaller than a first value when a power supply of the electronic apparatus turns off (S1); and
charging the secondary battery when the determination indicates that the capacity of the secondary battery is smaller than the first value (S5, S10a, S10b, S10c).

7. The method according to claim 6, **characterized by** further comprising a step of stopping charging the secondary battery when a specific instruction is issued while the secondary battery is being charged (S11a, S11b, S11c, S3).

8. The method according to claim 6, **characterized by** further comprising a step of stopping charging the secondary battery and turning on the power supply of the electronic apparatus if a specific instruction is issued while the secondary battery is being charged (S8) .

9. The method according to claim 6, **characterized by** further comprising a step of stopping charging the secondary battery when a predetermined period of time elapses after the secondary battery starts to be charged (S11a, S3) .

10. The method according to claim 6, **characterized by** further comprising a step of stopping charging the secondary battery when the capacity of the secondary battery exceeds a second value after the secondary battery starts to be charged (S11c, S3).

11. An electronic system, **characterized by** comprising:
a fuel cell unit (2) having a fuel cell (22) capable of generating power by chemical reaction and a repeatedly chargeable/dischargeable secondary battery (23); and
an electronic apparatus (1) operable using the fuel cell unit,
the electronic apparatus (1) comprising,
a determining unit (11) determining whether a capacity of the secondary battery is smaller than a first value when a power supply of the electronic apparatus turns off, and
a controlling unit (11, 16) giving an instruction to charge the secondary battery when the determining unit determines that the capacity of the secondary battery is smaller than the first value,
the cell unit (2) comprising,
a charging control unit (21, 24) charging the secondary battery using power generated by the fuel cell in response to the instruction.

12. The electronic system according to claim 11, **characterized in that** the charging control unit (21, 24) stops charging the secondary battery and the controlling unit (11, 16) turns on the power supply of the electronic apparatus if a specific instruction is issued while the secondary battery is being charged.

13. The electronic system according to claim 11, **characterized in that** the charging control unit (21, 24) stops charging the secondary battery when a predetermined period of time elapses after the secondary battery starts to be charged.

14. The electronic system according to claim 11, **characterized in that** the charging control unit (21, 24) stops charging the secondary battery when the capacity of the secondary battery exceeds a second value after the secondary battery starts to be charged.
